# FASCICULE DE BREVET EUROPEEN

(11) **EP 3 905 890 B1**
(45) Date de publication et mention de la délivrance du brevet: **03.09.2025**
(21) Numéro de dépôt: 19848978.3
(22) Date de dépôt: 23.12.2019
(51) Int. Cl.: F25D 3/11

(54) **PROCÉDÉ ET INSTALLATION D'ENROBAGE DE PRODUITS ALIMENTAIRES**
VERFAHREN UND ANLAGE ZUR BESCHICHTUNG VON LEBENSMITTELPRODUKTEN
METHOD AND INSTALLATION FOR COATING FOOD PRODUCTS

(30) Priorité: 03.01.2019 FR 1900026
(43) Date de publication de la demande: 10.11.2021
(73) Titulaire: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: POIRIER, Alban, 75007 PARIS (FR); CLOAREC, Alain, 75007 PARIS (FR); CHARVE, Etienne, 75007 PARIS (FR); POUCHAIN, Olivier, 75007 PARIS (FR)
(74) Mandataire: Air Liquide
(86) Numéro de dépôt international: PCT/FR2019/053275
(87) Numéro de publication internationale: WO 2020/141273

(56) Documents cités:
- EP-A1- 0 091 497
- EP-A1- 0 530 014
- EP-A1- 0 893 070
- WO-A1-00/16645
- FR-A1- 2 789 270
- US-A- 4 708 881

## Description

La présente invention concerne un procédé et une installation d'enrobage de produits alimentaires avec une substance d'enrobage liquide ou pâteuse, du type comportant une étape de mise en contact des produits alimentaires avec la substance d'enrobage et une étape d'apport de frigories extérieures pour provoquer la congélation de la substance d'enrobage autour des produits.

Les plats cuisinés conservés à l'état congelé comportent couramment un cœur constitué d'un produit alimentaire tel que de la viande, du poisson, un légume, ou encore une pâtisserie, entouré totalement d'un enrobage congelé (sauce, huile, chocolat...).

L'enrobage des produits alimentaires, à partir de la sauce initialement liquide ou pâteuse, s'effectue dans un appareil mélangeur, couramment appelé « baratte », qui est équipé d'un dispositif d'injection de fluide frigorigène, par exemple de l'azote liquide ou du dioxyde de carbone liquide.

L'appareil mélangeur comporte une cuve cylindrique rotative à axe horizontal. Elle comporte intérieurement des pâles de mélange des produits. L'injection du fluide frigorigène s'effectue le plus couramment suivant l'axe de la cuve.

Pour assurer l'enrobage des produits, on introduit dans la cuve un lot de produits alimentaires pré-refroidis, le plus souvent pré-congelés. Alors que la cuve est entraînée en rotation, des phases d'injection de sauce à température ambiante et des phases d'injection de fluide frigorigène sont réalisées. Ainsi, les produits alimentaires congelés en étant constamment mélangés au contact de la sauce sont progressivement enrobés par la sauce se solidifiant sous l'action non seulement des frigories apportées par le fluide frigorigène injecté mais également par transfert en provenance du produit qui était pré-congelé.

Les produits alimentaires enrobés dans une telle installation présentent un certain nombre de défauts d'aspect résultant des contraintes mécaniques appliquées sur le produit lors de la mise en rotation de la cuve et des pâles.

Il est en outre constaté que certaines particules de sauce sont congelées à l'écart des produits devant être enrobés, et constituent donc des particules indésirables couramment appelées «fines».

Le document FR-2 789 270 illustre cet état de la technique antérieur. Les documents EP 0 893 070, EP 0 530 014, US 4 708 881, EP 0 091 497 et WO 00/16645 divulguent également des exemples de l'art antérieur.

La présente invention a notamment pour but de fournir un procédé et une installation d'enrobage de produits alimentaires permettant d'apporter une solution aux problèmes techniques précédemment évoqués, et notamment :
- d'obtenir des produits enrobés présentant un aspect visuel amélioré ;
- d'obtenir un meilleur contrôle du taux d'enrobage réalisé ;
- d'améliorer la consommation du procédé.

A cet effet, l'invention a pour objet un procédé d'enrobage de produits alimentaires avec une substance d'enrobage, du type comportant une étape de mise en contact des produits alimentaires avec la substance d'enrobage, et où avant mise en contact des produits alimentaires et de la substance d'enrobage, les produits alimentaires sont sous-refroidis par apport de frigories extérieures à une température inférieure à leur température initiale, et où les produits alimentaires et ladite substance d'enrobage sont alors ultérieurement mis en contact sans apport de frigories extérieures, l'enrobage autour des produits étant figé sous l'action du transfert de frigories des produits sous-refroidis à ladite substance d'enrobage, se caractérisant en ce que le sous-refroidissement des produits est effectué dans une trémie (qui peut être notamment à base cylindrique ou pyramidale), apte à être alimentée en produit à enrober, trémie qui est munie de moyens d'amenée d'un fluide cryogénique, la trémie étant munie en sa partie basse d'une vis creuse munie de spires assurant le convoyage du produit et permettant le déversement du produit hors de la trémie vers l'étape de mise en contact des produits alimentaires avec la substance d'enrobage, lesdits moyens d'amenée d'un fluide cryogénique dans la trémie comprenant une canne d'injection, par exemple de type clarinette à orifices, qui est positionnée à l'intérieur des spires de la vis creuse, s'étendant dans une direction sensiblement parallèle à l'axe de la vis.

Suivant des modes particuliers de mise en œuvre, le procédé peut comporter l'une ou plusieurs des caractéristiques suivantes :
**1.** la température initiale des produits, avant la phase de sous-refroidissement dans la trémie, correspond à un état congelé, donc typiquement à une température située entre -12 et -20°C . En effet il faut considérer le fait que selon la température de sous refroidissement obtenue dans la trémie on obtient (selon la température de la sauce) un taux d'enrobage donné, l'objectif ici étant de tenter d'obtenir une température moyenne du produit à enrober stable.
**2.** la température initiale des produits, avant la phase de sous-refroidissement dans la trémie, est inférieure ou égale à 6°C.
**3.** le procédé comporte, après l'étape de mise en contact des produits sous-refroidis avec la substance d'enrobage, une étape ultérieure de refroidissement des produits alimentaires enrobés par apport de frigories extérieures. Comme il apparaitra clairement à l'homme du métier, lors ou après le dépôt d'enrobage (par exemple de sauce), l'énergie de sous-refroidissement a permis de surgeler la sauce en surface, aussi pour stabiliser le produit et éviter les phénomènes de collage il est avantageux de mettre en œuvre un équipement de refroidissement qui peut par exemple être un tunnel de surgélation ou bien un équipement mettant en œuvre un bain de cryogène.
**4.** les produits alimentaires sont sous-refroidis dans la trémie à une température comprise entre -20°C et -80°C, et avantageusement comprise entre -30°C et - 60°C.
**5.** la substance d'enrobage est sensiblement à température ambiante, lors de sa mise en contact avec les produits alimentaires.

Comme on l'a vu, l'apport de cryogène dans la trémie est effectué, en tout ou partie, à l'aide d'une canne d'injection (de type clarinette à orifices), positionnée au sein (à l'intérieur) de la vis creuse i.e de ses spires . On peut selon l'invention faire intervenir, en plus de cette canne d'injection, un moyen additionnel d'arrivée de cryogène dans la trémie (par exemple ceux classiquement utilisés tels qu'un tore d'injection).

On n'insistera pas ici sur la structure de telles clarinettes d'injection, bien connues de l'homme du métier des gaz, dont le dimensionnement et notamment le nombre de trous d'injection sera déterminé au cas par cas par un calcul thermique de besoin de frigories pour le débit maximum de produits.

De façon préférée, la canne en question est isolée sous vide ou autre.

Selon un mode avantageux de mise en œuvre de l'invention, l'injection dans la canne est régulée (et si un tore additionnel est présent l'injection dans ce toreest avantageusement fixée et non régulée), utilisant une mesure de température (préférentiellement par thermocouple) en sortie de la vis creuse de transfert, dans la zone de sortie du produit de la vis vers l'équipement de mise en contact avec l'enrobage (dans cette zone, le produit chute, il n'est plus dans la vis creuse), régulation TOR (tout ou rien), ou préférentiellement une régulation PID avec une vanne TOR, ou bien encore une vanne proportionnelle pour la canne d'injection et TOR pour le complément du tore dans la trémie.

L'invention a en outre pour objet une installation d'enrobage de produits alimentaires avec une substance, par exemple une sauce, du type comportant des moyens de mise en contact des produits alimentaires avec la substance d'enrobage, ainsi que des moyens permettant, avant mise en contact des produits alimentaires et de la substance d'enrobage, de sous-refroidir les produits par apport de frigories extérieures à une température inférieure à leur température initiale, et ainsi le fait que les produits alimentaires et ladite substance d'enrobage sont alors ultérieurement mis en contact sans apport de frigories extérieures, l'enrobage autour des produits étant figé sous l'action du transfert de frigories des produits sous-refroidis à ladite substance d'enrobage, se caractérisant en ce que les moyens de sous refroidissement des produits comprennent une trémie, apte à être alimentée en produit à enrober, trémie qui est munie de moyens d'amenée d'un fluide cryogénique, la trémie étant munie en sa partie basse d'une vis creuse munie de spires permettant le convoyage et le déversement du produit hors de la trémie vers l'étape de mise en contact des produits alimentaires avec la substance d'enrobage, lesdits moyens d'amenée d'un fluide cryogénique dans la trémie comprenant une canne d'injection, par exemple de type clarinette à orifices, qui est positionnée à l'intérieur des spires de la vis creuse, s'étendant dans une direction sensiblement parallèle à l'axe de la vis.

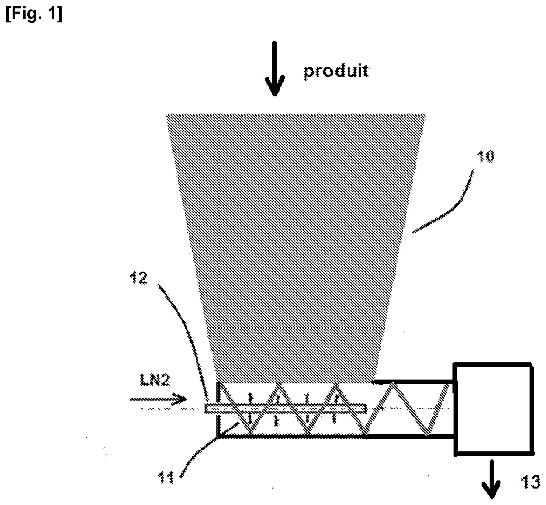

La Figure 1 annexée fournit une vue schématique partielle d'une trémie 10 conforme à l'invention, munie en sa partie base d'une vis creuse de transfert 11 et d'une canne d'injection 12 de cryogène située au sein de la vis creuse i.e au sein des anneaux de la vis creuse. La vis 11 permet le déversement du produit hors de la trémie vers l'étape ultérieure (13) de mise en contact des produits alimentaires sous-refroidis avec la substance d'enrobage.

Les résultats des expérimentations menées par la Demanderesse dans ces conditions ont montré les points suivants :
- une homogénéité du taux de sauce sur les produits, pas d'écarts dans le temps.
- Une régulation fine de la température de sous refroidissement dans la trémie, même pour des débits très élevés (jusqu'à 4 tonnes/h) avec un temps de séjour très faible.
- Pas de détérioration du produit dans ce système de sous-refroidissement (contrairement à ce qui était observé dans les barattes) donc pas de création de fines de produit à enrober.

## Revendications

1. Procédé d'enrobage de produits alimentaires avec une substance d'enrobage, du type comportant une étape de mise en contact des produits alimentaires avec la substance d'enrobage, et où avant mise en contact des produits alimentaires et de la substance d'enrobage, les produits alimentaires sont sous-refroidis par apport de frigories extérieures à une température inférieure à leur température initiale, et où les produits alimentaires et ladite substance d'enrobage sont alors ultérieurement mis en contact sans apport de frigories extérieures, l'enrobage autour des produits étant figé sous l'action du transfert de frigories des produits sous-refroidis à ladite substance d'enrobage,
**se caractérisant en ce que** le sous-refroidissement des produits est effectué dans une trémie (10), apte à être alimentée en produit à enrober, trémie qui est munie de moyens d'amenée d'un fluide cryogénique, la trémie étant munie en sa partie basse d'une vis creuse (11) munie de spires permettant le convoyage et le déversement du produit hors de la trémie vers l'étape de mise en contact des produits alimentaires avec la substance d'enrobage, lesdits moyens d'amenée d'un fluide cryogénique dans la trémie comprenant une canne d'injection (12), par exemple de type clarinette à orifices, qui est positionnée à l'intérieur des spires de la vis creuse, s'étendant dans une direction sensiblement parallèle à l'axe de la vis.

2. Procédé selon la revendication 1, **se caractérisant en ce que** la température des produits entrant dans la trémie est située dans la gamme de -12 à -20°C .

3. Procédé selon la revendication 1, **se caractérisant en ce que** la température des produits entrant dans la trémie est inférieure ou égale à 6°C.

4. Procédé selon l'une des revendications précédentes **se caractérisant en ce que** après l'étape de mise en contact des produits sous-refroidis dans la trémie avec la substance d'enrobage, une étape ultérieure de surgélation des produits enrobés est effectuée par apport de frigories extérieures.

5. Procédé selon l'une des revendications précédentes **se caractérisant en ce que** les produits alimentaires sont sous-refroidis dans la trémie à une température comprise entre -20°C et -80°C, et avantageusement comprise entre -30°C et -60°C.

6. Procédé selon l'une des revendications précédentes **se caractérisant en ce que** la substance d'enrobage est sensiblement à température ambiante, lors de sa mise en contact avec les produits sous-refroidis.

7. Procédé selon l'une des revendications précédentes **se caractérisant en ce que** lesdits moyens d'amenée comprennent outre la canne d'injection un tore d'injection de cryogène dans la trémie.

8. Procédé selon l'une des revendications précédentes **se caractérisant en ce que** l'on régule l'injection de cryogène dans la canne par une mesure de température du produit réalisée en sortie de la vis, dans la zone de chute du produit de la vis vers l'équipement où est réalisée la mise en contact avec la substance d'enrobage.

9. Installation d'enrobage de produits alimentaires avec une substance, par exemple une sauce, du type comportant des moyens de mise en contact des produits alimentaires avec la substance d'enrobage, ainsi que des moyens permettant, avant mise en contact des produits alimentaires et de la substance d'enrobage, de sous-refroidir les produits par apport de frigories extérieures à une température inférieure à leur température initiale,
**se caractérisant en ce que** les moyens de sous-refroidissement des produits comprennent une trémie (10), apte à être alimentée en produit à enrober, trémie qui est munie de moyens d'amenée d'un fluide cryogénique, la trémie étant munie en sa partie basse d'une vis creuse (11) munie de spires permettant le convoyage et le déversement du produit hors de la trémie vers l'étape de mise en contact des produits alimentaires avec la substance d'enrobage, lesdits moyens d'amenée d'un fluide cryogénique dans la trémie comprenant une canne d'injection (12), par exemple de type clarinette à orifices, qui est positionnée à l'intérieur des spires de la vis creuse, s'étendant dans une direction sensiblement parallèle à l'axe de la vis.

10. Installation selon la revendication 9, **se caractérisant en ce que** lesdits moyens d'amenée comprennent de plus un tore d'injection de cryogène dans la trémie.

## Patentansprüche

1. Verfahren zum Überziehen von Nahrungsmittelprodukten mit einer Überzugssubstanz des Typs, der einen Schritt des Inkontaktbringens der Nahrungsmittelprodukte mit der Überzugssubstanz umfasst und bei dem die Nahrungsmittelprodukte vor dem Inkontaktbringen der Nahrungsmittelprodukte und der Überzugssubstanz durch Zuführen von externen Frigorien auf eine Temperatur unter ihrer Ausgangstemperatur unterkühlt werden und bei dem die Nahrungsmittelprodukte und die Überzugssubstanz daraufhin ohne Zuführung von externen Frigorien weiter in Kontakt gebracht werden, wobei der Überzug um die Produkte herum unter der Einwirkung des Transfers von Frigorien aus den unterkühlten Produkten auf die Überzugssubstanz erstarrt,
**dadurch gekennzeichnet, dass** das Unterkühlen der Produkte in einem Bunker (10) erfolgt, der geeignet ist, mit dem zu überziehenden Produkt beschickt zu werden, wobei der Bunker mit Mitteln zum Zuführen einer kryogenen Flüssigkeit versehen ist, wobei der Bunker in seinem unteren Teil mit einer hohlen Schnecke (11) versehen ist, die mit Windungen versehen ist, die das Befördern und das Austragen des Produkts aus dem Bunker zu dem Schritt des Inkontaktbringens der Nahrungsmittelprodukte mit der Überzugssubstanz ermöglichen, wobei die Mittel zum Zuführen einer kryogenen Flüssigkeit in den Bunker ein Einleitungsrohr (12) umfassen, zum Beispiel vom Typ Klarinette mit Öffnungen, das im Inneren der Windungen der hohlen Schnecke angeordnet ist und sich in einer im Wesentlichen parallel zur Achse der Schnecke verlaufenden Richtung erstreckt.

2. Verfahren nach Anspruch 1, **dadurch gekennzeichnet, dass** die Temperatur der in den Bunker eintretenden Produkte in dem Bereich von -12 bis -20 °C liegt.

3. Verfahren nach Anspruch 1, **dadurch gekennzeichnet, dass** die Temperatur der in den Bunker eintretenden Produkte 6 °C oder weniger beträgt.

4. Verfahren nach einem der vorhergehenden Ansprüche, **dadurch gekennzeichnet, dass** nach dem Schritt des Inkontaktbringens der unterkühlten Produkte in dem Bunker mit der Überzugssubstanz ein weiterer Schritt des Tiefkühlens der überzogenen Produkte durch Zuführen von externen Frigorien erfolgt.

5. Verfahren nach einem der vorhergehenden Ansprüche, **dadurch gekennzeichnet, dass** die Nahrungsmittelprodukte in dem Bunker auf eine Temperatur zwischen -20 °C und - 80 °C und vorteilhafterweise zwischen -30 °C und -60 °C unterkühlt werden.

6. Verfahren nach einem der vorhergehenden Ansprüche, **dadurch gekennzeichnet, dass** die Überzugssubstanz bei ihrem Inkontaktbringen mit den unterkühlten Produkten im Wesentlichen auf Umgebungstemperatur ist.

7. Verfahren nach einem der vorhergehenden Ansprüche, **dadurch gekennzeichnet, dass** die Mittel zum Zuführen neben dem Einleitungsrohr einen Torus zum Einleiten eines Kryogens in den Bunker umfassen.

8. Verfahren nach einem der vorhergehenden Ansprüche, **dadurch gekennzeichnet, dass** das Einleiten eines Kryogens in das Rohr durch eine Messung der Temperatur des Produkts geregelt wird, die im Ausgang der Schnecke ausgeführt wird, in dem Bereich des Herabfallens des Produkts aus der Schnecke zu der Einrichtung, in der das Inkontaktbringen mit der Überzugssubstanz ausgeführt wird.

9. Anlage zum Überziehen von Nahrungsmittelprodukten mit einer Substanz, zum Beispiel einer Soße, des Typs, der Mittel zum Inkontaktbringen der Nahrungsmittelprodukte mit der Überzugssubstanz umfasst sowie Mittel, die es vor dem Inkontaktbringen der Nahrungsmittelprodukte und der Überzugssubstanz ermöglichen, die Produkte durch Zuführen von externen Frigorien auf eine Temperatur unter ihrer Ausgangstemperatur zu unterkühlen,
**dadurch gekennzeichnet, dass** die Mittel zum Unterkühlen der Produkte einen Bunker (10) umfassen, der geeignet ist, mit zu überziehenden Produkten beschickt zu werden, wobei der Bunker mit Mitteln zum Zuführen einer kryogenen Flüssigkeit versehen ist, wobei der Bunker in seinem unteren Teil mit einer hohlen Schnecke (11) versehen ist, die mit Windungen versehen ist, die das Befördern und Austragen des Produkts aus dem Bunker heraus zu dem Schritt des Inkontaktbringens der Nahrungsmittel mit der Überzugssubstanz ermöglichen, wobei die Mittel zum Zuführen einer kryogenen Flüssigkeit in den Bunker ein Einleitungsrohr (12) umfassen, zum Beispiel vom Typ Klarinette mit Öffnungen, die im Inneren der Windungen der hohlen Schnecke angeordnet ist und sich in einer im Wesentlichen parallel zur Achse der Schnecke verlaufenden Richtung erstreckt.

10. Anlage nach Anspruch 9, **dadurch gekennzeichnet, dass** die Mittel zum Zuführen zusätzlich einen Torus zum Einleiten eines Kryogens in den Bunker umfassen.

## Claims

1. Method for coating food products with a coating substance, of the type comprising a step of bringing the food products into contact with the coating substance, and wherein, before the food products and the coating substance are brought into contact, the food products are subcooled to a temperature below their initial temperature by adding external cold energy, and wherein the food products and said coating substance are then subsequently brought into contact without adding external cold energy, the coating around the products being frozen by cold energy being transferred from the subcooled products to said coating substance,
**characterized in that** the subcooling of the products takes place in a hopper (10), which can be supplied with the product to be coated, said hopper being provided with means for supplying a cryogenic fluid, the hopper being provided, in its lower part, with a hollow screw (11) provided with turns allowing the product to be conveyed and discharged out of the hopper towards the step of bringing the food products into contact with the coating substance, said means for supplying a cryogenic fluid into the hopper comprising an injection tube (12), for example of the manifold type with orifices, which is positioned inside the turns of the hollow screw, extending in a direction substantially parallel to the axis of the screw.

2. Method according to Claim 1, **characterized in that** the temperature of the products entering the hopper is in the range from -12 to -20°C.

3. Method according to Claim 1, **characterized in that** the temperature of the products entering the hopper is less than or equal to 6°C.

4. Method according to one of the preceding claims, **characterized in that**, after the step of bringing the products subcooled in the hopper into contact with the coating substance, a subsequent step of deep-freezing the coated products is carried out by adding external cold energy.

5. Method according to one of the preceding claims, **characterized in that** the food products are subcooled in the hopper to a temperature of between -20°C and -80°C, and advantageously of between -30°C and -60°C.

6. Method according to one of the preceding claims, **characterized in that** the coating substance is substantially at ambient temperature when it is brought into contact with the subcooled products.

7. Method according to one of the preceding claims, **characterized in that** said supplying means comprise, in addition to the injection tube, a torus for injection of cryogen into the hopper.

8. Method according to one of the preceding claims, **characterized in that** the injection of cryogen into the tube is regulated by measuring the temperature of the product at the outlet of the screw, in the region in which the product falls from the screw towards the equipment in which it is brought into contact with the coating substance.

9. Installation for coating food products with a substance, for example a sauce, of the type comprising means for bringing the food products into contact with the coating substance, as well as means enabling, before the food products and the coating substance are brought into contact, the products to be subcooled to a temperature below their initial temperature by adding external cold energy,
**characterized in that** the means for subcooling the products comprise a hopper (10), which can be supplied with the product to be coated, said hopper being provided with means for supplying a cryogenic fluid, the hopper being provided, in its lower part, with a hollow screw (11) provided with turns allowing the product to be conveyed and discharged out of the hopper towards the step of bringing the food products into contact with the coating substance, said means for supplying a cryogenic fluid into the hopper comprising an injection tube (12), for example of the manifold type with orifices, which is positioned inside the turns of the hollow screw, extending in a direction substantially parallel to the axis of the screw.

10. Installation according to Claim 9, **characterized in that** said supplying means further comprise a torus for injection of cryogen into the hopper.
